# EUROPÄISCHE PATENTANMELDUNG

(11) **EP 2 952 777 A1**
(43) Veröffentlichungstag der Anmeldung: **09.12.2015**
(21) Anmeldenummer: 15167055.1
(22) Anmeldetag: 11.05.2015
(51) Int. Cl.: F16F 15/123, F16F 15/134

(54) **TORSIONSSCHWINGUNGSDÄMPFER, VERFAHREN ZUM AUSLEGEN EINES TORSIONSSCHWINGUNGSDÄMPFERS, SOWIE DREHMOMENTÜBERTRAGUNGSEINRICHTUNG**

(30) Priorität: 03.06.2014 DE 102014210449
(71) Anmelder: Schaeffler Technologies AG & Co. KG, 91074 Herzogenaurach (DE)
(72) Erfinder: Wagner, Marc, 67470 Croettwiller (FR); Schnädelbach, David, 76534 Baden-Baden-Neuweier (DE); Baral, Florian, 76337 Waldbronn (DE); Lorenz, Darius, 77654 Offenburg (DE); Eckerle, Matthias, 77815 Bühl (DE)

(57) **Zusammenfassung**

Die Erfindung betrifft einen mehrstufigen Torsionsschwingungsdämpfer für ein Fahrzeug, insbesondere für einen Antriebsstrang eines Kraftfahrzeugs mit einer Zylinderabschaltung für dessen Verbrennungsmotor (1), mit einer Dämpfereinrichtung (35), welche einen ersten Dämpfer (31) und einen zweiten Dämpfer (32) aufweist, wobei wenigstens zwei Stufen (KP, AM) der Dämpfereinrichtung (35) gemäß zweier ausgezeichneter Motordaten (KP, AM) eines betreffenden Verbrennungsmotors (1) bestimmt sind.

Ferner betrifft die Erfindung ein Verfahren zum Auslegen eines mehrstufigen Torsionsschwingungsdämpfers für ein Fahrzeug, insbesondere für einen Antriebsstrang eines Kraftfahrzeugs mit einer Zylinderabschaltung für dessen Verbrennungsmotor (1), wobei wenigstens zwei Stufen (KP, AM) des Torsionsschwingungsdämpfers (30) gemäß zweier ausgezeichneter Motordaten (KP, AM) eines betreffenden Verbrennungsmotors (1) ausgelegt werden.

Des Weiteren betrifft die Erfindung eine Drehmomentübertragungseinrichtung, insbesondere einen Turbinendämpfer (2), bevorzugt einen Doppelturbinendämpfer (2), oder ein Zweimassenschwungrad (2), für ein Fahrzeug, insbesondere für einen Antriebsstrang eines Kraftfahrzeugs mit einer Zylinderabschaltung für dessen Verbrennungsmotor (1), wobei die Drehmomentübertragungseinrichtung (2) einen erfindungsgemäßen mehrstufigen Torsionsschwingungsdämpfer (30) umfasst oder einen erfindungsgemäß ausgelegten mehrstufigen Torsionsschwingungsdämpfer aufweist.

## Beschreibung

Die vorliegende Erfindung betrifft einen mehrstufigen Torsionsschwingungsdämpfer für ein Fahrzeug, insbesondere für einen Antriebsstrang eines Kraftfahrzeugs mit einer Zylinderabschaltung für dessen Verbrennungsmotor. Ferner betrifft die vorliegende Erfindung ein Verfahren zum Auslegen eines solchen mehrstufigen Torsionsschwingungsdämpfers. Darüber hinaus betrifft die Erfindung eine Drehmomentübertragungseinrichtung, insbesondere einen Turbinendämpfer, bevorzugt einen Doppelturbinendämpfer, oder ein Zweimassenschwungrad, für ein Fahrzeug.

An einer Kurbelwelle eines periodisch arbeitenden Verbrennungsmotors treten im Betrieb bei einer Rotation der Kurbelwelle sich überlagernde Drehungleichförmigkeiten auf, wobei sich deren Art und/oder Frequenz mit einer Drehzahl der Kurbelwelle ändern. Vergleichsweise starke Drehungleichförmigkeiten entstehen im Betrieb eines Kraftfahrzeugs bei einem sich verändernden Drehmoment des Verbrennungsmotors, z. B. bei einer sich ändernden Drehmomentanforderung durch einen Fahrer des Kraftfahrzeugs. Ferner werden durch Verbrennungsvorgänge im Verbrennungsmotor insbesondere im Zugbetrieb Drehschwingungen im Antriebsstrang des Kraftfahrzeugs angeregt.

Zur Verringerung der Drehungleichförmigkeiten bzw. der Drehschwingungen im Antriebsstrang kann ein Torsionsschwingungsdämpfer ggf. mit einer Fliehkraftpendeleinrichtung eingesetzt werden, wobei der Torsionsschwingungsdämpfer im Wesentlichen die vergleichsweise starken Drehungleichförmigkeiten und die Fliehkraftpendeleinrichtung im Wesentlichen die periodischen Drehschwingungen über einen Drehzahlbereich des Verbrennungsmotors tilgen kann. Ein Torsionsschwingungsdämpfer, auch als Drehschwingungsdämpfer bezeichnet, wird insbesondere als eine Dämpfungseinrichtung zwischen dem Verbrennungsmotor und einem Getriebe des Kraftfahrzeugs eingesetzt.

So können Torsionsschwingungsdämpfer beispielsweise in/an Kupplungsscheiben von Reibkupplungen, als Zweimassenschwungräder oder als Drehschwingungsdämpfer an/in Drehmomentwandlern eingesetzt werden. Hierbei sind Fliehkraftpendeleinrichtungen oft Bestandteil von Torsionsschwingungsdämpfern, wobei eine Fliehkraftpendeleinrichtung insbesondere einem Turbinenrad eines hydrodynamischen Drehmomentwandlers eines Automatikgetriebes des Kraftfahrzeugs zugehörig sein kann. - Aufgrund eines Kostendrucks, einer gestiegenen Performanz und permanent kleiner werdender Bauräume in den Antriebssträngen von Kraftfahrzeugen treten zunehmend neue Angelegenheiten in einen Focus der Entwickler.

Ein solcher Problembereich besteht bei einem Kraftfahrzeug mit einer Zylinderabschaltung seines Verbrennungsmotors. Es ist eine Aufgabe der Erfindung, einen verbesserten Torsionsschwingungsdämpfer und ein verbessertes Verfahren zum Auslegen eines Torsionsschwingungsdämpfers für ein Fahrzeug, insbesondere für einen Antriebsstrang eines Kraftfahrzeugs mit einer Zylinderabschaltung für dessen Verbrennungsmotor, anzugeben. Ferner ist es eine Aufgabe der Erfindung eine dementsprechend verbesserte Drehmomentübertragungseinrichtung zur Verfügung zu stellen. Hierbei soll der Torsionsschwingungsdämpfer in beiden Betriebsarten des Verbrennungsmotors sowohl im Zug als auch im Schub die Drehungleichförmigkeiten bzw. Drehschwingungen im Antriebsstrang bis zu einem gewissen Grad tilgen können.

Die Aufgabe der Erfindung ist mittels eines mehrstufigen Torsionsschwingungsdämpfers für ein Fahrzeug, insbesondere für einen Antriebsstrang eines Kraftfahrzeugs mit einer Zylinderabschaltung für dessen Verbrennungsmotor, gemäß Anspruch 1; durch ein Verfahren zum Auslegen eines mehrstufigen Torsionsschwingungsdämpfers für ein Fahrzeug, gemäß Anspruch 2; und mittels einer Drehmomentübertragungseinrichtung, insbesondere einem Turbinendämpfer, bevorzugt einem Doppelturbinendämpfer, oder einem Zweimassenschwungrad, gemäß Anspruch 10 gelöst. Vorteilhafte Weiterbildungen, zusätzliche Merkmale und/oder Vorteile der Erfindung ergeben sich aus den abhängigen Ansprüchen und der folgenden Beschreibung.

Der erfindungsgemäße mehrstufige Torsionsschwingungsdämpfer weist eine Dämpfereinrichtung mit einem ersten Dämpfer und einem zweiten Dämpfer auf, wobei wenigstens zwei, bevorzugt jeweils einzeldämpferbetreffende, Stufen der Dämpfereinrichtung gemäß zweier bestimmter oder ausgezeichneter Motordaten eines betreffenden Verbrennungsmotors bestimmt sind. - Bei dem erfindungsgemäßen Auslegeverfahren werden wenigstens zwei Stufen des Torsionsschwingungsdämpfers gemäß zweier bestimmter oder ausgezeichneter Motordaten eines betreffenden Verbrennungsmotors ausgelegt. - Die erfindungsgemäße Drehmomentübertragungseinrichtung umfasst einen erfindungsgemäßen mehrstufigen Torsionsschwingungsdämpfer oder weist einen erfindungsgemäß ausgelegten bzw. hergestellten mehrstufigen Torsionsschwingungsdämpfer auf.

Gemäß der Erfindung können die zwei bestimmten oder ausgezeichneten Motordaten positive und/oder negative Werte von Motordaten sein; d. h. ein Motordatum der Motordaten darf nicht null sein oder nahe null liegen. So kann sich ein bestimmtes oder ausgezeichnetes Motordatum auf einen Betrieb des Verbrennungsmotors als Teilmotor beziehen; d. h. der Verbrennungsmotor wird in einer Phase betrieben, in welcher wenigstens ein Zylinder des Verbrennungsmotors abgeschaltet ist. Ferner kann sich ein bestimmtes oder ausgezeichnetes Motordatum auf einen Betrieb des Verbrennungsmotors als Vollmotor beziehen; d. h. der Verbrennungsmotor wird in einer Phase betrieben, in welcher alle Zylinder des Verbrennungsmotors regulär arbeiten.

Gemäß der Erfindung kann sich wenigstens ein bestimmtes oder ausgezeichnetes Motordatum an einem Motormoment oder einer Motorleistung orientieren. Bevorzugt orientiert sich dabei wenigstens ein bestimmtes oder ausgezeichnetes Motordatum an einem nominalen oder einem maximalen Motormoment, oder einer nominalen oder einer maximalen Motorleistung des Verbrennungsmotors. Bevorzugt sind die zwei bestimmten oder ausgezeichneten Motordaten die nominalen oder maximalen Motormomente oder Motorleistungen des Verbrennungsmotors.

Ferner kann zusätzlich eine andere Kennzahl oder ein anderer Kennwert des betreffenden Verbrennungsmotors, des betreffenden Antriebsstrangs oder des betreffenden Fahrzeugs z. B. als eine Nebenbedingung oder eine Fallunterscheidung angewendet werden. Dies kann z. B. eine Motordrehzahl des Verbrennungsmotors sein. Zusätzlich oder alternativ zu einem Motormoment oder einer Motorleistung kann eine dazu analoge Kennzahl oder ein dazu analoger Kennwert des betreffenden Verbrennungsmotors, des betreffenden Antriebsstrangs oder des betreffenden Fahrzeugs angewendet werden.

In Ausführungsformen der Erfindung ist bzw. werden eine erste Stufe des ersten Dämpfers, eine erste Stufe des zweiten Dämpfers und/oder eine erste Stufe der Dämpfereinrichtung auf ein Übergangsmoment, und eine zweite Stufe des ersten Dämpfers, eine zweite Stufe des zweiten Dämpfers und/oder eine zweite Stufe der Dämpfereinrichtung auf ein Anschlagsmoment des Torsionsschwingungsdämpfers ausgelegt. Das Übergangsmoment und das Anschlagsmoment ist bzw. wird bevorzugt von den bestimmten oder ausgezeichneten Motordaten des betreffenden Verbrennungsmotors bestimmt.

In bevorzugten Ausführungsformen der Erfindung beträgt das Übergangsmoment der ersten Stufe, also das Übergangsmoment von der ersten auf die zweite Stufe, des ersten Dämpfers, des zweiten Dämpfers und/oder der Dämpfereinrichtung ca. 80-250%, bevorzugt ca. 100-200%, des nominalen oder maximalen Motormoments, oder der nominalen oder maximalen Motorleistung des betreffenden Verbrennungsmotors als Teilmotor. Mit Teilmotor ist hier wieder der betreffende Verbrennungsmotor in seinem Betrieb mit Zylinderabschaltung gemeint.

In bevorzugten Ausführungsformen der Erfindung beträgt das Anschlagsmoment der zweiten Stufe des ersten Dämpfers, des zweiten Dämpfers und/oder der Dämpfereinrichtung ca. 80-150%, bevorzugt ca. 100-130%, des nominalen oder maximalen Motormoments, oder der nominalen oder maximalen Motorleistung des betreffenden Verbrennungsmotors als Vollmotor. Mit Vollmotor ist hier wieder der betreffende Verbrennungsmotor in seinem Betrieb ohne Zylinderabschaltung gemeint.

Diese Auslegungsmerkmale des ersten Dämpfers, des zweiten Dämpfers und/oder der Dämpfereinrichtung sind insbesondere sowohl gültig für den bevorzugt als Innendämpfer (siehe unten) ausgebildeten ersten Dämpfer im Zug, als auch für den bevorzugt als Außendämpfer (siehe ebenfalls unten) ausgebildeten zweiten Dämpfer ebenfalls im Zug. - In Ausführungsformen der Erfindung können der erste Dämpfer, der zweite Dämpfer und/oder die Dämpfereinrichtung für einen Zug oder Schub des Torsionsschwingungsdämpfers, wie oben dargelegt, ausgelegt sein bzw. werden.

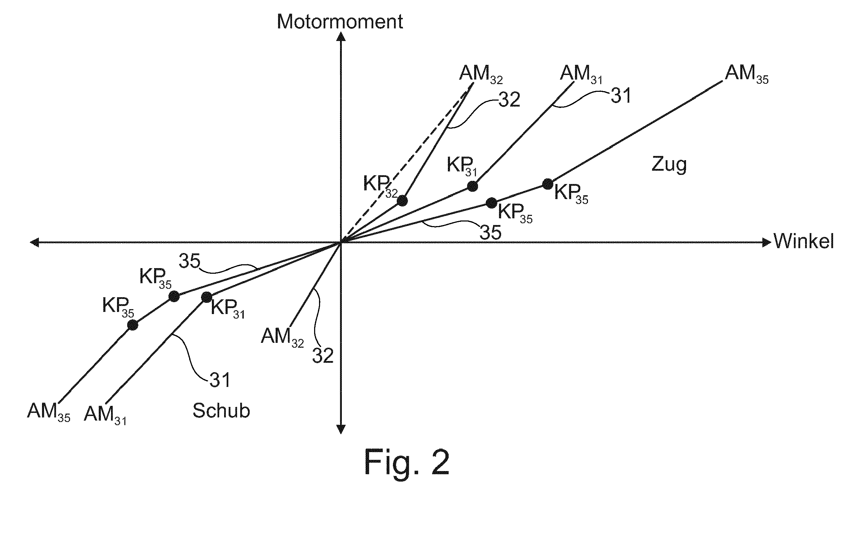

Das Übergangsmoment von der ersten in die zweite Stufe des ersten Dämpfers kann gleich oder ungleich dem Übergangsmoment von der ersten in die zweite Stufe des zweiten Dämpfers sein. D. h. die Knickpunkte der Kennlinien des ersten und des zweiten Dämpfers zwischen jeweils der ersten und der zweiten Stufe brauchen auf Höhe des Motormoments nicht übereinzustimmen. Der erste Dämpfer kann vor, bei (vgl. Fig. 2, Schub) oder nach (vgl. Fig. 2, Zug) einem Übergangsmoment des zweiten Dämpfers in seine zweite Stufe kommen, was vice versa auch für den zweiten Dämpfer gelten kann.

Das Anschlagsmoment des ersten Dämpfers kann gleich oder ungleich dem Anschlagsmoment des zweiten Dämpfers sein. D. h. die Anschlagmomente des Innendämpfers und des Außendämpfer brauchen nicht übereinzustimmen. Eine Kennlinie des ersten Dämpfers im Zug kann einer Kennlinie des ersten Dämpfers in einem Schub des Torsionsschwingungsdämpfers gleichen. D. h. bevorzugt der Außendämpfer besitzt die gleiche Kennlinie im Zug wie im Schub.

Der zweite Dämpfer kann im Schub ein- oder zweistufig ausgelegt sein bzw. werden, wobei der zweite Dämpfer im Schub einen vergleichsweise kurzen Verdrehwinkel aufweist. D. h. der Innendämpfer kann im Schub ein- oder zweistufig ausgelegt sein bzw. werden, jedoch mit einem verkürztem Verdrehwinkel. Insgesamt kann sich eine Kennlinie eines Reihendämpfers aus dem ersten und dem zweiten Dämpfer ergeben, die zwei bis acht unterschiedliche Steigungen im Zug und/oder im Schub aufweisen kann.

In Ausführungsformen der Erfindung kann eine Mehrstufigkeit eines Vordämpfers, eines Hauptdämpfers, des ersten Dämpfers, eines Zwischendämpfers, des zweiten Dämpfers, der Dämpfereinrichtung, des Reihendämpfers und/oder des Torsionsschwingungsdämpfers mittels wenigstens zweier aneinander ansitzender bzw. anliegender Energiespeicher, mittels wenigstens zweier ineinander eingesetzter Energiespeicher, mittels eines Federelements mit progressiver oder degressiver Federkennlinie, mittels wenigstens eines längeren oder eines kürzeren Flanschfensters und/oder mittels wenigstens eines längeren oder eines kürzeren Energiespeichers realisiert sein.

Hierbei können die längeren und/oder kürzeren Flanschfenster einander gegenüberliegend und/oder sternförmig im Dämpferflansch eingerichtet sein. Ferner können die längeren und/oder kürzeren Energiespeicher einander gegenüberliegend und/oder sternförmig im Dämpferflansch eingerichtet sein. Ein Energiespeicher ist bevorzugt als ein Federelement, insbesondere eine Druck- oder Spiraldruckfeder, bevorzugt eine Linear- oder Bogendruckfeder, ausgebildet. Ferner ist bevorzugt der erste Dämpfer als ein Außendämpfer und der zweite Dämpfer als ein Innendämpfer des Torsionsschwingungsdämpfers ausgebildet.

Gemäß der Erfindung kann der mehrstufige Torsionsschwingungsdämpfer als ein zweistufiger Torsionsschwingungsdämpfer ausgebildet sein. Ferner kann der mehrstufige Torsionsschwingungsdämpfer als ein mehrstufiger Torsionsschwingungsmehrfachdämpfer, insbesondere ein mehrstufiger, bevorzugt ein zweistufiger, Torsionsschwingungsdoppeldämpfer ausgebildet sein. Bevorzugt ist der mehrstufige Torsionsschwingungsdämpfer als ein Turbinendämpfer oder ein Zweimassenschwungrad ausgebildet. Ein Zwischenflansch oder ein Ausgangsflansch des Torsionsschwingungsdämpfers kann eine Fliehkraftpendeleinrichtung aufweisen.

Die Erfindung ist im Folgenden anhand von Ausführungsbeispielen unter Bezugnahme auf die beigefügte schematische Zeichnung näher erläutert. Elemente oder Bauteile, welche eine identische, univoke oder analoge Ausbildung und/oder Funktion besitzen, sind in der Beschreibung mit denselben Bezugszeichen versehen und in den Figuren (Fig.) der Zeichnung mit denselben Bezugszeichen gekennzeichnet. Mögliche, in der Beschreibung nicht erläuterte, in der Zeichnung nicht dargestellte und/oder nicht abschließende Alternativen, statische und/oder kinematische Umkehrungen etc. zu der dargestellten Ausführungsform und/oder den erläuterten Ausführungsformen der Erfindung bzw. einzelnen Baugruppen oder Bauteilen davon, können der Bezugszeichenliste entnommen werden. In den Fig. der Zeichnung zeigen:
- Fig. 1: ein mechanisches Ersatzschaltbild einer erfindungsgemäßen Drehmomentübertragungseinrichtung mit einem erfindungsgemäßen mehrstufigen Torsionsschwingungsdämpfer für einen Antriebsstrang eines Kraftfahrzeugs mit einer Zylinderabschaltung; und
- Fig. 2: Kennlinien eines zweistufigen ersten Dämpfers und eines zweistufigen zweiten Dämpfers des Torsionsschwingungsdämpfers aus Fig. 1 sowie eine Kennlinie eines sich dadurch ergebenden mehrstufigen Reihendämpfers des erfindungsgemäßen Torsionsschwingungsdämpfers.

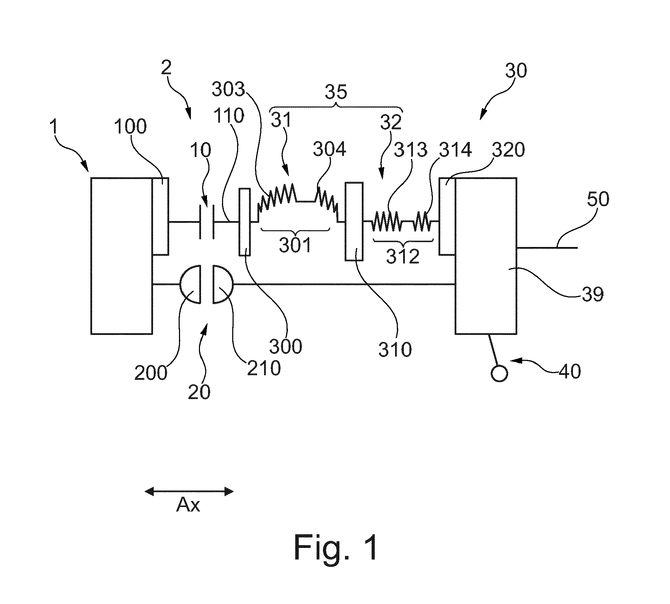

Das mechanische Ersatzschaltbild der Fig. 1 zeigt eine beispielhafte Ausführungsform einer erfindungsgemäßen Drehmomentübertragungseinrichtung 2 mit einem erfindungsgemäßen mehrstufigen Torsionsschwingungsdämpfer 30, der als ein Doppeldämpfer 30 ausgebildet ist. Hierbei weist der Torsionsschwingungsdämpfer 30 einen bevorzugt als einen Außendämpfer 31 ausgebildeten ersten Dämpfer 31 und einen bevorzugt als einen Innendämpfer 32 ausgebildeten zweiten Dämpfer 32 einer bevorzugt als Reihendämpfer 35 ausgebildeten Dämpfereinrichtung 35 auf.

Eine Antriebsseite der Drehmomentübertragungseinrichtung 2 in Form eines Kupplungseingangs 100 einer Kupplungseinrichtung 10 sowie eines Pumpenrads 200 eines hydrodynamischen Drehmomentwandlers 20 ist mit einem Verbrennungsmotor 1 drehfest verbunden. Die Kupplungseinrichtung 20 ist vorliegend als eine Wandlerüberbrückungskupplung 20 zur Überbrückung einer über das Pumpenrad 200 und ein Turbinenrad 210 stattfindenden Drehmomentübertragung ausgebildet. Ein Kupplungsausgang 120 der Kupplungseinrichtung 20 ist mit einem Dämpfereingangsteil 300 des Torsionsschwingungsdämpfers 30 drehfest verbunden.

Das Dämpfereingangsteil 300 ist im Rahmen des ersten Dämpfers 31 über die Wirkung erster Energiespeicherelemente 301 mit einem Dämpferzwischenteil 310 gegeneinander schwingbar verbunden. Das Dämpferzwischenteil 310 ist im Rahmen des zweiten Dämpfers 32 über die Wirkung zweiter Energiespeicherelemente 312 mit einem Dämpferausgangsteil 320 gegeneinander schwingbar verbunden. Das Dämpferausgangsteil 320 ist drehfest am Turbinenrad 30 angeordnet und mit einer Abtriebsseite 39 verbunden und zur Aufnahme einer drehzahladaptiven Fliehkraftpendeleinrichtung 40 vorgesehen. Ferner kann am Dämpferzwischenteil 310 alternativ oder zusätzlich eine Fliehkraftpendeleinrichtung vorgesehen sein.

Ferner zeigt die Fig. 1 eine Axialrichtung Ax bzw. eine Längsrichtung Ax eines Antriebsstrangs eines Fahrzeugs, einer Kurbelwelle des Verbrennungsmotors 1, der Drehmomentübertragungseinrichtung 2 bzw. einer Baugruppe davon, des Torsionsschwingungsdämpfers 30, einer Getriebewelle 50 bzw. einer Getriebewellenanordnung 50 etc. - Es ist natürlich möglich, die Erfindung nicht nur auf solche Torsionsschwingungsdämpfer 30 anzuwenden, sondern auf sämtliche mehrstufigen, insbesondere zweistufigen, Torsionsschwingungsdämpfer, bei welchen eine mehrstufige Kennlinie eingerichtet werden soll. Dies kann Einfach-, Doppel- oder Mehrfachdämpfer betreffen.

Gemäß der Erfindung ist der Torsionsschwingungsdämpfer 30 mehrstufig, insbesondere zweistufig, und bevorzugt als ein Doppeldämpfer 30 oder Mehrfachdämpfer 30 ausgebildet. Hierbei kann der erste Dämpfer 31, der zweite Dämpfer 32 und/oder der Reihendämpfer 35 des Torsionsschwingungsdämpfers 30 mehrstufig, insbesondere zweistufig ausgebildet sein. Vorliegend sind sowohl der erste Dämpfer 31 als auch der zweite Dämpfer 32 zweistufig ausgebildet, was einen mehrstufigen Reihendämpfer 35 (vgl. Fig. 2) ergibt. Dies ist im Folgenden beispielhaft an Federelementanordnungen 301, 312, die insbesondere Druck- 301, 302; 313, 314 oder Spiraldruckfedern 301, 302; 313, 314 aufweisen, näher erläutert.

So weist ein Energiespeicher 301 (vgl. Fig. 1) des ersten Dämpfers 31 wenigstens einen Energiespeicher 303 einer ersten Stufe (KP₃₁, vgl. Fig. 2) und wenigstens einen Energiespeicher 304 einer zweiten Stufe (AM₃₁, vgl. Fig. 2) auf. Die Energiespeicher 303, 304 sind dabei bevorzugt als Linear- oder Bogendruckfedern ausgebildet. Auch zu einer Bogenfeder arrangierte Linearfedern sind anwendbar. Die Energiespeicher 301; 303, 304 sind dabei auf ein Übergangsmoment KP₃₁ von der ersten auf die zweite Stufe und ein Anschlagmoment AM₃₁ der zweiten Stufe des ersten Dämpfers 31, und somit anteilig auch für die Dämpfereinrichtung 35 ausgelegt. Dies gilt bevorzugt sowohl für eine Zugseite (vgl. Fig. 2, rechts oben) als auch eine Schubseite (vgl. Fig. 2, links unten) des Torsionsschwingungsdämpfers 30.

Ferner weist ein Energiespeicher 312 (vgl. Fig. 1) des zweiten Dämpfers 32 wenigstens einen Energiespeicher 313 einer ersten Stufe (KP₃₂, vgl. Fig. 2) und wenigstens einen Energiespeicher 314 einer zweiten Stufe (AM₃₂, vgl. Fig. 2) auf. Die Energiespeicher 313, 314 sind dabei bevorzugt als Linearfedern ausgebildet. Auch Bogenfedern oder zu Bogenfedern arrangierte Linearfedern sind anwendbar. Die Energiespeicher 312; 313, 314 sind dabei auf ein Übergangsmoment KP₃₂ von der ersten auf die zweite Stufe und ein Anschlagmoment AM₃₂ der zweiten Stufe des zweiten Dämpfers 32, und somit anteilig auch für die Dämpfereinrichtung 35 ausgebildet. Dies kann sowohl für eine Zugseite (vgl. Fig. 2, rechts oben) als auch eine Schubseite (vgl. Fig. 2, links unten) des Torsionsschwingungsdämpfers 30 gelten.

Das Übergangsmoment KP₃₁ der ersten Stufe des ersten Dämpfers 31 und das Übergangsmoment KP₃₂ der ersten Stufe des zweiten Dämpfers 32 bilden die erste Stufe der Dämpfereinrichtung 35 (KP₃₅). Diese erste Stufe der Dämpfereinrichtung 35 kann dabei selbst mehrstufig sein, siehe hierzu die Zug- und die Schubseite in Fig. 2. - Das Anschlagmoment AM₃₁ der zweiten Stufe des ersten Dämpfers 31 und das Anschlagmoment AM₃₂ der zweiten Stufe des zweiten Dämpfers 32 bilden die zweite Stufe der Dämpfereinrichtung 35 (AM₃₅). Diese zweite Stufe der Dämpfereinrichtung 35 kann dabei selbst wiederum mehrstufig sein (in Fig. 2 nicht dargestellt).

Die Übergangsmomente KP₃₁, KP₃₂; KP₃₅ der ersten Stufe und die Anschlagmomente AM₃₁, AM₃₂; AM₃₅ der zweiten Stufe werden bei dem erfindungsgemäßen Torsionsschwingungsdämpfer 30 derart eingerichtet, dass sie mit jeweils zwei bestimmten oder ausgezeichneten Motordaten (KP, AM) eines betreffenden Verbrennungsmotors 1 korrespondieren. Hierbei müssen die Übergangsmomente KP₃₁, KP₃₂ der ersten Stufe und die Anschlagmomente AM₃₁, AM₃₂ der zweiten Stufe jeweils des ersten 31 und des zweiten Dämpfers 32 untereinander nicht bei demselben Motormoment liegen. Siehe hierzu in der Fig. 2 die Übergangsmomente KP₃₁, KP₃₂ der ersten Stufe im Zug.

Die zwei bestimmten oder ausgezeichneten Motordaten (KP, AM) des betreffenden Verbrennungsmotors 1 beziehen sich gemäß der Erfindung auf einen Betrieb des Verbrennungsmotors 1 als Teilmotor und als Vollmotor. D. h. die Übergangsmomente KP₃₁, KP₃₂; KP₃₅ der ersten Stufe (KP) berücksichtigen in ihrem Schwingungsverhalten einen Betrieb des Verbrennungsmotors 1 mit wenigstens einem abgeschalteten Zylinder, wohingegen die Anschlagmomente AM₃₁, AM₃₂; AM₃₅ der zweiten Stufe (AM) in ihrem Schwingungsverhalten einen Betrieb des Verbrennungsmotors 1 berücksichtigen, in welchem alle Zylinder aktiv arbeiten. Die ausgezeichneten Motordaten (KP, AM) können dabei nicht null sein oder dürfen vergleichsweise geringe Werte nicht annehmen.

Bevorzugt berechnen sich die Übergangsmomente KP₃₁, KP₃₂; KP₃₅ der ersten Stufe und die Anschlagmomente AM₃₁, AM₃₂; AM₃₅ der zweiten Stufe anhand eines bestimmten oder ausgezeichneten Motormoments, oder einer bestimmten oder ausgezeichneten Motorleistung des betreffenden Verbrennungsmotors 1. Bevorzugt sind dies die nominalen oder maximalen Motormomente, oder die nominalen oder maximalen Motorleistungen des betreffenden Verbrennungsmotors 1 einerseits im Betrieb als Teilmotor (erste Stufe) und andererseits als Vollmotor (zweite Stufe).

In bevorzugten Ausführungsformen der Erfindung ist der insbesondere als Innendämpfer 32 ausgebildete zweite Dämpfer 32 wenigstens einstufig ausgelegt. Dies gilt z. B. für den Betrieb des Torsionsschwingungsdämpfer 30 im Schub; für den Zug ist dies mit einer gestrichelten Kennlinie in der Fig. 2 dargestellt. Bevorzugt ist der zweite Dämpfer 32 jedoch im Zug zweistufig ausgelegt, was auch für den Schub zutreffen kann. Auch eine mehr als zweistufige Ausbildung im Zug und/oder im Schub ist möglich (in der Fig. 2 nicht dargestellt).

In bevorzugten Ausführungsformen der Erfindung ist der insbesondere als Außendämpfer 31 ausgebildete erste Dämpfer 31 wenigstens zweistufig ausgelegt. Dies gilt bevorzugt für den Betrieb des Torsionsschwingungsdämpfers 30 im Zug als auch im Schub (vgl. Fig. 2). Auch eine mehr als zweistufige Ausbildung im Zug und/oder im Schub ist möglich (in der Fig. 2 nicht dargestellt). - Eine "Summe" aus dem ersten Dämpfer 31 und dem zweiten Dämpfer 32 ergibt eine Kennlinie des Reihendämpfers 35 bzw. der Dämpfereinrichtung 35 des Torsionsschwingungsdämpfers 30.

Es gibt eine Vielzahl von Möglichkeiten die jeweils ein-, zwei- oder mehrstufigen Kennlinien (vgl. Fig. 2) des ersten Dämpfers 31, des zweiten Dämpfers 32, und somit des Reihendämpfers 35 zu realisieren. Natürlich kann auch ein weiterer oder es können weitere Dämpfer in den Reihendämpfer 35 miteinbezogen sein. - Bei einer Verwendung mehrerer in Reihe angeordneter Einzelfedern 303, 304; 313, 314 zur Bildung eines Energiespeichers 301, 312 kann es zweckmäßig sein, wenn wenigstens zwei Arten von Einzelfedern 303, 304; 313, 314 mit unterschiedlicher Steifigkeit verwendet werden.

Die Einzelfedern können dabei in einer vorteilhaften Weise derart angeordnet sein, dass bei einer Beanspruchung des Torsionsschwingungsdämpfers 30 auf Schub, die Einzelfedern 303/304; 313/314 mit einer geringeren Steifigkeit sich innerhalb eines Energiespeichers 301, 312 schubseitig befinden, wohingegen die Zugseite des entsprechenden Energiespeichers 301, 312 mittels wenigstens einer Einzelfeder 304/303; 314/313 mit hoher bzw. höherer Steifigkeit bzw. Federrate gebildet ist.

Ein Energiespeicher 301, 312 kann auch mittels einer Mehrzahl von bezüglich ihrer Federsteifigkeit abgestuften Einzelfedern 303, 304, ...; 313, 314, ... gebildet sein, wobei ausgehend von einem zugseitig zugewandten Ende eines Energiespeichers 301, 312 die Einzelfedern ..., 304, 303; ..., 314, 313 derart angeordnet sind, dass deren Federsteifigkeit abnimmt, so dass auf der Schubseite des entsprechenden Energiespeichers 301, 312 vorzugsweise die Einzelfeder 303, 313 mit einer geringsten Steifigkeit zu liegen kommt. Ferner können Einzelfedern 303(, 304); 313(, 314) mit progressiver oder degressiver Federkennlinie angewendet werden.

Für manche Anwendungsfälle kann es zweckmäßig sein, wenn die vorbeschriebene Anordnung der Einzelfedern 303, 304, ...; 313, 314, ... mit verschiedener Steifigkeit umgekehrt erfolgt oder aber die Einzelfedern 303, 304, ...; 313, 314, ... hintereinander derart angeordnet werden, dass abwechselnd Einzelfedern 303, 304, 303, ...; 313, 314, 313, ... mit verschiedener Steifigkeit angeordnet sind. - Ferner können die Einzelfedern 304, 303; 314, 313 auch durch mehrere ineinander geschachtelte Einzelfedern 304, 303; 314, 313 gebildet sein. Des Weiteren ist es möglich, innerhalb einer Einzelfeder 304, 303; 314, 313 ein Gummielement vorzusehen oder die Einzelfeder 304, 303; 314, 313 eines Energiespeichers 301, 312 über Gummielemente miteinander zu verbinden.

Das Dämpfereingangsteil 300, das Dämpferzwischenteil 310 und/oder das Dämpferausgangsteil 320 sind an eine Länge der jeweiligen Energiespeicher 301, 312 bzw. deren Federelemente 303, 304; 313, 314 angepasst. Insbesondere kann eine Mehrstufigkeit mit längeren und kürzeren Flanschfenstern realisiert sein. - Die erfindungsgemäße Drehmomentübertragungseinrichtung 2 kann ganz allgemein als ein Drehmomentwandler, eine Kupplungsbaugruppe, eine Kupplung, eine Föttingerkupplung, eine Dämpfereinrichtung, eine Dämpferbaugruppe, ein Turbinendämpfer, ein Pumpendämpfer, ein Torsionsschwingungsdämpfer, ein Drehschwingungsdämpfer, ein Dämpfer, ein Zweimassenwandler, ein Zweimassenschwungrad, ein Fliehkraftpendel etc. oder eine Kombination davon ausgebildet sein.

### Bezugszeichenliste

- 1: Verbrennungsmotor
- 2: Drehmomentübertragungseinrichtung, z. B. Drehmomentwandler, Kupplungsbaugruppe, Kupplung, Föttingerkupplung, Dämpfereinrichtung, Dämpferbaugruppe, Turbinendämpfer, Pumpendämpfer, Torsionsschwingungsdämpfer, Drehschwingungsdämpfer, Dämpfer, Zweimassenwandler, Zweimassenschwungrad, Fliehkraftpendel etc. oder Kombination davon
- 10: Kupplungseinrichtung, Wandlerüberbrückungskupplung
- 20: (hydrodynamischer) Drehmomentwandler
- 30: mehrstufiger Torsionsschwingungsdämpfer, Drehschwingungsdämpfer, Dämpfereinrichtung, bevorzugt als Mehrfach- oder Doppeldämpfer ausgebildet, Drehmomentübertragungseinrichtung
- 31: erster Dämpfer, Außendämpfer, Dämpfer, Teil der Dämpfereinrichtung 35, Index für erster Dämpfer
- 32: zweiter Dämpfer, Innendämpfer, Dämpfer, Teil der Dämpfereinrichtung 35, Index für zweiter Dämpfer
- 35: Dämpfereinrichtung, Reihendämpfer, Dämpfer, des Torsionsschwingungsdämpfers 30, Index für Reihendämpfer
- 39: Abtriebsseite
- 40: Fliehkraftpendeleinrichtung
- 50: Getriebewelle, Getriebewellenanordnung
- 100: Kupplungseingang
- 110: Kupplungsausgang
- 200: Pumpenrad
- 210: Turbinenrad
- 300: Dämpfereingangsteil
- 301: Energiespeicher erster Dämpfer 31, z. B. Federelement bzw. Federelementeanordnung
- 303: Energiespeicher erste Stufe des ersten Dämpfers 31, z. B. Federelement, insbesondere Druck- oder Spiraldruckfeder, bevorzugt Linear- oder Bogendruckfeder
- 304: Energiespeicher zweite Stufe des ersten Dämpfers 31, z. B. Federelement, insbesondere Druck- oder Spiraldruckfeder, bevorzugt Linear- oder Bogendruckfeder
- 310: Dämpferzwischenteil
- 312: Energiespeicher zweiter Dämpfer 32, z. B. Federelement bzw. Federelementeanordnung
- 313: Energiespeicher erste Stufe des zweiten Dämpfers 32, z. B. Federelement, insbesondere Druck- oder Spiraldruckfeder, bevorzugt Lineardruckfeder
- 314: Energiespeicher zweite Stufe des zweiten Dämpfers 32, z. B. Federelement, insbesondere Druck- oder Spiraldruckfeder, bevorzugt Lineardruckfeder
- 320: Dämpferausgangsteil
- Ax: Axialrichtung, Längsrichtung des Antriebsstrangs und der Kurbelwelle des Verbrennungsmotors 1, der Drehmomentübertragungseinrichtung 2 bzw. einer Baugruppe davon, des Torsionsschwingungsdämpfers 30, einer Getriebewelle 50 etc.
- KP: Übergangsmoment von der ersten auf die zweite Stufe des Dämpfers 31, 32, 35, Knickpunkt in Kennlinie des betreffenden Dämpfers 31, 32, 35, jeweiliges Ende der ersten Stufe
- AM: Anschlagmoment der zweiten Stufe der Dämpfers 31, 32, 35, jeweiliges Ende der zweiten Stufe
- KP₃₁: Übergangsmoment erster Dämpfer 31
- KP₃₂: Übergangsmoment zweiter Dämpfer 32
- KP₃₅: Übergangsmoment Reihendämpfer 35
- AM₃₁: Anschlagmoment erster Dämpfer 31
- AM₃₂: Anschlagmoment zweiter Dämpfer 32
- AM₃₅: Anschlagmoment Reihendämpfer 35

## Patentansprüche

1. Mehrstufiger Torsionsschwingungsdämpfer für ein Fahrzeug, insbesondere für einen Antriebsstrang eines Kraftfahrzeugs mit einer Zylinderabschaltung für dessen Verbrennungsmotor (1), mit einer Dämpfereinrichtung (35), welche einen ersten Dämpfer (31) und einen zweiten Dämpfer (32) aufweist, **dadurch gekennzeichnet, dass** wenigstens zwei Stufen (KP, AM) der Dämpfereinrichtung (35) gemäß zweier ausgezeichneter Motordaten (KP, AM) eines betreffenden Verbrennungsmotors (1) bestimmt sind.

2. Verfahren zum Auslegen eines mehrstufigen Torsionsschwingungsdämpfers für ein Fahrzeug, insbesondere für einen Antriebsstrang eines Kraftfahrzeugs mit einer Zylinderabschaltung für dessen Verbrennungsmotor (1), **dadurch gekennzeichnet, dass** wenigstens zwei Stufen (KP, AM) des Torsionsschwingungsdämpfers (30) gemäß zweier ausgezeichneter Motordaten (KP, AM) eines betreffenden Verbrennungsmotors (1) ausgelegt werden.

3. Mehrstufiger Torsionsschwingungsdämpfer oder Auslegeverfahren gemäß einem der vorhergehenden Ansprüche, **dadurch gekennzeichnet, dass**:
- die zwei ausgezeichneten Motordaten (KP, AM) positive und/oder negative Werte von Motordaten (KP, AM) sind;
- sich ein ausgezeichnetes Motordatum (KP) auf einen Betrieb des Verbrennungsmotors (1) als Teilmotor bezieht;
- sich ein ausgezeichnetes Motordatum (AM) auf einen Betrieb des Verbrennungsmotors (1) als Vollmotor bezieht;
- sich wenigstens ein ausgezeichnetes Motordatum (KP, AM) an einem Motormoment oder einer Motorleistung orientiert
- die zwei ausgezeichneten Motordaten (KP, AM) die nominalen oder maximalen Motormomente oder Motorleistungen des Verbrennungsmotors (1) sind; und/oder
- zusätzlich oder alternativ einem Motormoment oder einer Motorleistung eine dazu analoge Kennzahl oder ein dazu analoger Kennwert des betreffenden Verbrennungsmotors (1), des betreffenden Antriebsstrangs oder des betreffenden Fahrzeugs angewendet wird.

4. Mehrstufiger Torsionsschwingungsdämpfer oder Auslegeverfahren gemäß einem der vorhergehenden Ansprüche, **dadurch gekennzeichnet, dass** eine erste Stufe (KP) des ersten Dämpfers (31) und/oder des zweiten Dämpfers (32) auf ein Übergangsmoment (KP₃₁, KP₃₂) und eine zweite Stufe (AM) ersten Dämpfers (31) und/oder des zweiten Dämpfers (32) auf ein Anschlagsmoment (AM₃₁, AM₃₂) des Torsionsschwingungsdämpfers (30) ausgelegt sind bzw. werden, wobei das Übergangsmoment (KP₃₁, KP₃₂) und das Anschlagsmoment (AM₃₁, AM₃₂) von den ausgezeichneten Motordaten (KP, AM) des betreffenden Verbrennungsmotors (1) bestimmt ist bzw. wird.

5. Mehrstufiger Torsionsschwingungsdämpfer oder Auslegeverfahren gemäß einem der vorhergehenden Ansprüche, **dadurch gekennzeichnet, dass** das Übergangsmoment (KP₃₁, KP₃₂) von der ersten Stufe (KP) auf die zweite Stufe (AM) des ersten Dämpfers (31) und/oder des zweiten Dämpfers (32) ca. 80-250%, ca. 90-225%, bevorzugt ca. 100-200%, ca. 100-175% oder ca. 100-150% des nominalen oder maximalen Motormoments des betreffenden Verbrennungsmotors (1) als Teilmotor beträgt.

6. Mehrstufiger Torsionsschwingungsdämpfer oder Auslegeverfahren gemäß einem der vorhergehenden Ansprüche, **dadurch gekennzeichnet, dass** das Anschlagsmoment (AM₃₁, AM₃₂) der zweiten Stufe (AM) des ersten Dämpfers (31) und/oder des zweiten Dämpfers (32) ca. 80-150%, ca. 90-140%, bevorzugt ca. 100-130%, ca. 105-125% oder ca. 105-120% des nominalen oder maximalen Motormoments des betreffenden Verbrennungsmotors (1) als Vollmotor beträgt.

7. Mehrstufiger Torsionsschwingungsdämpfer oder Auslegeverfahren gemäß einem der vorhergehenden Ansprüche, **dadurch gekennzeichnet, dass**:
- der erste Dämpfer (31) und/oder der zweite Dämpfer (32) für einen Zug des Torsionsschwingungsdämpfers (30) ausgelegt sind bzw. werden;
- das Übergangsmoment (KP₃₁) von der ersten Stufe (KP) in die zweite Stufe (AM) des ersten Dämpfers (31) gleich oder ungleich dem Übergangsmoment (KP₃₂) von der ersten Stufe (KP) in die zweite Stufe (AM) des zweiten Dämpfers (32) ist;
- das Anschlagsmoment (AM₃₁) des ersten Dämpfers (31) gleich oder ungleich dem Anschlagsmoment (AM₃₂) des zweiten Dämpfers (32) ist;
- eine Kennlinie des ersten Dämpfers (31) im Zug einer Kennlinie des ersten Dämpfers (31) in einem Schub des Torsionsschwingungsdämpfers (30) gleicht; und/oder
- der zweite Dämpfer (32) im Schub ein- oder zweistufig ausgelegt ist bzw. wird, wobei der zweite Dämpfer (32) im Schub einen vergleichsweise kurzen Verdrehwinkel aufweist.

8. Mehrstufiger Torsionsschwingungsdämpfer oder Auslegeverfahren gemäß einem der vorhergehenden Ansprüche, **dadurch gekennzeichnet, dass** eine Mehrstufigkeit eines Vordämpfers, eines Hauptdämpfers, des ersten Dämpfers (31), eines Zwischendämpfers, des zweiten Dämpfers (32), der Dämpfereinrichtung (35), des Reihendämpfers (35) und/oder des Torsionsschwingungsdämpfers (30):
- mittels wenigstens zweier aneinander ansitzender Energiespeicher (303, 304; 313, 314);
- mittels wenigstens zweier ineinander eingesetzter Energiespeicher;
- mittels eines Federelements mit progressiver oder degressiver Federkennlinie;
- mittels wenigstens eines längeren oder eines kürzeren Flanschfensters; und/oder
- mittels wenigstens eines längeren oder eines kürzeren Energiespeichers realisiert ist.

9. Mehrstufiger Torsionsschwingungsdämpfer oder Auslegeverfahren gemäß einem der vorhergehenden Ansprüche, **dadurch gekennzeichnet, dass**:
- der mehrstufige Torsionsschwingungsdämpfer (30) als ein zweistufiger Torsionsschwingungsdämpfer (30) ausgebildet ist;
- der mehrstufige Torsionsschwingungsdämpfer (30) als ein mehrstufiger Torsionsschwingungsmehrfachdämpfer (30), insbesondere ein mehrstufiger Torsionsschwingungsdoppeldämpfer (30) ausgebildet ist;
- der mehrstufige Torsionsschwingungsdämpfer (30) als ein Turbinendämpfer (30) oder ein Zweimassenschwungrad ausgebildet ist;
- der erste Dämpfer (31) als ein Außendämpfer (31) und der zweite Dämpfer (32) als ein Innendämpfer (32) des Torsionsschwingungsdämpfers (30) ausgebildet ist;
- ein Energiespeicher ein Federelement, insbesondere eine Druck- oder Spiraldruckfeder, bevorzugt eine Linear- oder Bogendruckfeder, ist; und/oder
- ein Zwischenflansch oder ein Ausgangsflansch des Torsionsschwingungsdämpfers (30) eine Fliehkraftpendeleinrichtung (40) aufweist.

10. Drehmomentübertragungseinrichtung, insbesondere Turbinendämpfer (2), bevorzugt Doppelturbinendämpfer (2), oder Zweimassenschwungrad (2), für ein Fahrzeug, insbesondere für einen Antriebsstrang eines Kraftfahrzeugs mit einer Zylinderabschaltung für dessen Verbrennungsmotor (1), **dadurch gekennzeichnet, dass** die Drehmomentübertragungseinrichtung (2) einen mehrstufigen Torsionsschwingungsdämpfer (30) aufweist, der nach einem der Ansprüche 1 bis 9 ausgebildet ist, oder die Drehmomentübertragungseinrichtung (2) einen mehrstufigen Torsionsschwingungsdämpfer (30) aufweist, der durch ein Verfahren nach einem der Ansprüche 2 bis 9 ausgelegt ist.
